# EUROPÄISCHE PATENTSCHRIFT

(11) **EP 1 399 327 B1**
(45) Veröffentlichungstag und Bekanntmachung des Hinweises auf die Patenterteilung: **10.01.2007**
(21) Anmeldenummer: 02742772.3
(22) Anmeldetag: 22.05.2002
(51) Int. Cl.: B60W 10/02, B60K 31/04

(54) **VERFAHREN ZUM STEUERN EINES ANTRIEBSSTRANGS EINES KRAFTFAHRZEUGS**
METHOD FOR CONTROLLING A DRIVETRAIN ON A MOTOR VEHICLE
PROCEDE POUR COMMANDER L'ENSEMBLE TRANSMISSION D'UN VEHICULE AUTOMOBILE

(30) Priorität: 28.06.2001 DE 10131209
(43) Veröffentlichungstag der Anmeldung: 24.03.2004
(73) Patentinhaber: SIEMENS AKTIENGESELLSCHAFT, 80333 München (DE)
(72) Erfinder: GRAF, Friedrich, 93161 Sinzing (DE); LANKES, Martin, 93055 Regensburg (DE)
(86) Internationale Anmeldenummer: PCT/DE2002/001852
(87) Internationale Veröffentlichungsnummer: WO 2003/002368

(56) Entgegenhaltungen:
- DE-A- 3 334 724
- DE-A- 19 721 034
- DE-A- 19 751 225
- DE-A- 19 841 917
- US-B1- 6 240 356

## Beschreibung

Die Erfindung betrifft ein Verfahren zum Steuern des Antriebsstrangs eines Kraftfahrzeugs nach dem Oberbegriff von Patentanspruch 1. Ein gattungsgemäßes Verfahren ist beispielsweise aus der Druckschrift DE 198 41 917 A1 bekannt.

Wird bei laufendem Motor und eingelegtem Gang - dieser muss zum Anfahren geeignet sein - weder das Fahrpedal noch das Bremspedal durch den Fahrer des Kraftfahrzeugs betätigt, so ist bei einer Vielzahl von Kraftfahrzeugen durch geeignete Ansteuerung des Antriebsstrangs eine Funktion realisiert, die eine langsame Fortbewegung des Kraftfahrzeugs bewirkt. Im Fachjargon ist diese Funktion auch unter dem Namen "Kriechen" oder "Ankriechen" bekannt. Eine derartige Kriechfunktion - im folgenden auch als Kriechmodus bezeichnet - erleichtert das Rangieren oder das Anfahren an einer Steigung.

Automatische Getriebe besitzen in der Regel einen hydrodynamischen Wandler, der bewirkt, dass das Kraftfahrzeug bei unbetätigtem Fahr- und Bremspedal anrollt und sich mit mäßiger Geschwindigkeit fortbewegt. Dabei wird das Motordrehmoment im Motorleerlauf durch den Wandler verstärkt, was auch zu erhöhter Zugkraft beim Anfahren führt. Aus Fahrzeugsicht wird somit, wenn weder das Fahrpedal noch das Bremspedal betätigt wird, ein vorgegebenes lastabhängiges Radmoment im Zusammenhang mit einer verbrennungsmotorischen Leerlaufregelung zur Verfügung gestellt.

Hydrodynamische Wandler sind allerdings verlustbehaftet und zwar in zunehmendem Maße je stärker die Wandlung besteht. Da dies aber zu erhöhtem Kraftstoffverbrauch führt, wird in vielen Systemen der Betrieb in Wandlung im Hinblick auf einen möglichst optimalen Wirkungsgrad stark eingeschränkt - üblicherweise unter Verwendung einer Überbrückungskupplung - oder auf völlig andere Lösungen zur Kriech- oder Anfahrfunktion zurückgegriffen.

Aus der Druckschrift EP 1 078 805 A1 ist eine Antriebsstrangsteuerung bekannt, die eine Erkennungsschaltung aufweist, durch die die jeweilige Fahrsituationen des Kraftfahrzeugs und die Fahrercharakteristik ermittelt werden. Eine Steuereinrichtung für die Kupplung wird beim Anfahren des Kraftfahrzeugs an die ermittelte Fahrsituation und/oder Fahrercharakteristik adaptiv angepasst. Durch die Steuereinrichtung werden beim Anfahren des Kraftfahrzeugs an die Motorsteuerung Signale übermittelt, mit denen die Motordrehzahl nach gespeicherten Kennlinien gesteuert wird. Dabei ist auch eine gesonderte Kennlinie für einen Kriechmodus vorgesehen.

Bekannte Antriebsstrangssteuerungen zur Automatisierung eines Kriechvorgangs basieren auf der gezielten Erhöhung des Kupplungsmoments bei einem im Getriebe eingelegten Anfahrgang. Derartige Kriechvorgänge werden im folgenden als Kupplungsmomentbasierte Kriechvorgänge bezeichnet. Sie beziehen sich auf Fahrzeuge mit einem automatisiertem Schaltgetriebe und automatisierter Kupplung. Als Kupplung eignen sich dabei sowohl trocken als auch nass laufende Varianten. Nachteilig an einer derartigen Realisierung des Kriechvorgangs ist aber, dass das Kupplungsmoment den Fahrerwunsch nur indirekt repräsentiert. Da sich nämlich zwischen dem Kupplungssystem und dem Radantrieb eines Kraftfahrzeugs der komplette Antriebsstrang befindet, kann eine Änderung des Kupplungsmoments abhängig von den Betriebszuständen der einzelnen Komponenten des Antriebsstrangs unterschiedliche Änderungen im Radmoment hervorrufen. Dies ist beispielsweise der Fall, wenn im Getriebe unterschiedliche Gänge eingelegt sind. Wird etwa beim Kriechen der Anfahrgang mit der höchsten Übersetzung (erster Gang) gewählt, so ist das resultierende Radmoment bei gleichem Kupplungsmoment größer als im Gang mit der zweitgrößten Übersetzung (zweiter Gang).

Bei einem Kupplungsmoment basierten Kriechvorgang muss daher bei der Einstellung des Kupplungsmoments dem gesamten Antriebsstrang Beachtung geschenkt werden. Mit zunehmender Komplexität des Antriebsstrangs steigt somit auch die Komplexität der Bestimmung des einzustellenden Kupplungsmoments. Schon jetzt ist aber ein Trend zu immer komplexer werdenden Antriebssystemen erkennbar, z.B. durch Einsatz eines zusätzlichen Antriebsaggregats in Form eines Kurbelwellen-Starter-Generators neben dem herkömmlichen Verbrennungsmotors.

Der Erfindung liegt daher die Aufgabe zugrunde, ein Verfahren zum Steuern des Antriebsstrangs eines Kraftfahrzeugs zu schaffen, durch das ein Kriechvorgang unabhängig von der Konfiguration des Antriebsstrangs, unabhängig vom Getriebekonzept und unabhängig von der Art der Antriebsaggregate komfortabel gesteuert werden kann.

Diese Aufgabe wird durch ein Verfahren mit den Merkmalen des Patentanspruchs 1 gelöst. Vorteilhafte Weiterbildungen der Erfindung sind in den Unteransprüchen niedergelegt.

Erfindungsgemäß soll in einem Langsamfahrbereich des Kraftfahrzeugs eine Kriechfunktion aktiviert werden. Ein derartiger Langsamfahrbereich wird erkannt, wenn der Motor läuft und im Getriebe ein Anfahrgang eingelegt ist.und die Fahrzeuggeschwindigkeit unterhalb eines vorgegebenen Schwellwerts liegt und das Fahrpedal und das Bremspedal unbetätigt sind. Von einer Radmomentinterpretation wird daraufhin ein Soll-Radmoment derart vorgegeben, dass zunächst eine Zielgeschwindigkeit erreicht wird und anschließend das Fahrzeug in einem vorgegeben Geschwindigkeitsbereich um die Zielgeschwindigkeit gehalten wird.

Vorteilhaft ist besonders die Anwendbarkeit des erfindungsgemäßen Verfahrens unabhängig von der Konfiguration des Antriebsstrangs. Insbesondere kann das Verfahren sowohl bei Antriebssträngen ohne Drehmomentwandler als auch bei Antriebssträngen mit Drehmomentwandler angewendet werden.

Ein Ausführungsbeispiel der Erfindung wird im folgenden anhand der Figuren erläutert. Es zeigen:

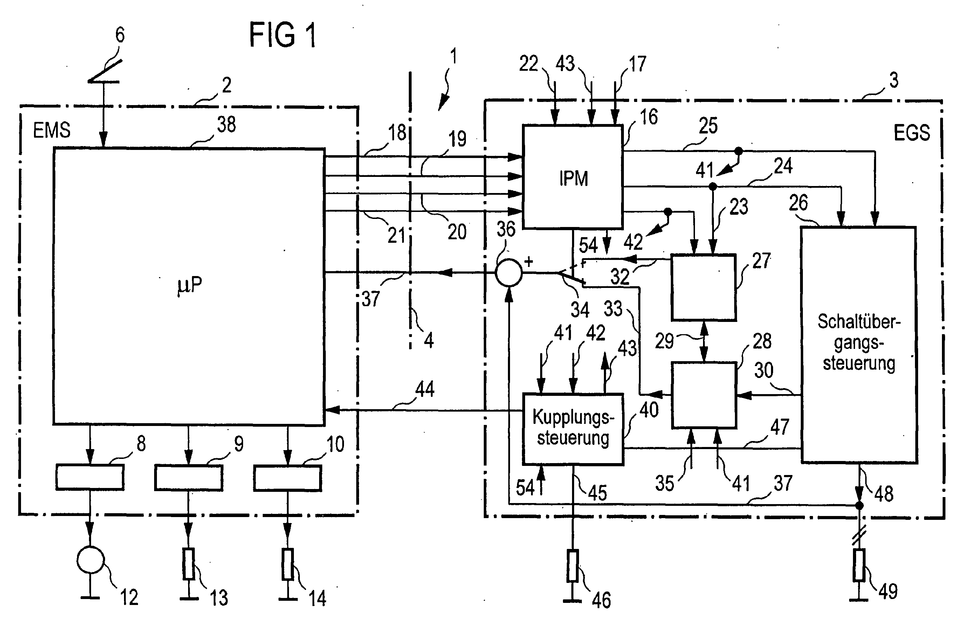

- Figur 1: ein Blockschaltbild einer erfindungsgemäßen Antriebsstrangsteuerung,
- Figur 2: ein Blockschaltbild eines Antriebsstrangmanagements als Bestandteil eine Antriebsstrangsteuerung nach Figur 1,
- Figur 3: ein Kennfeld zur Radmomenteninterpretation,
- Figur 4: einen zeitabhängigen Verlauf von Motordrehzahlen und -drehmomenten der Antriebsstrangsteuerung nach Figur 1 bei einem Kriechvorgang,
- Figur 5: einen zeitabhängigen Verlauf des vorgegebenen Radmoments bei einem Kriechvorgang,
- Figur 6: einen zeitabhängigen Verlauf der Fahrzeuggeschwindigkeit bei einem Kriechvorgang und
- Figur 7: ein Flussdiagramm eines erfindungsgemäßen Verfahrens zur Steuerung eines Antriebsstrangs gemäß Figur 1.

Eine schematisch dargestellte Antriebsstrangsteuerung 1 eines Kraftfahrzeugs enthält eine elektronische Motorsteuerung (EMS) 2 und eine elektronische Getriebesteuerung (EGS) 3, die untereinander über eine Schnittstelle 4 kommunizieren, indem sie Daten über Betriebsgrößen des Kraftfahrzeugs und Steuersignale, insbesondere in Form von physikalischen Beschreibungsgrößen untereinander austauschen. Die Motorsteuerung 2 empfängt Signale von einem Fahrpedal 6 und sie weist drei Steuersignalausgaben auf: Eine Signalausgabe 8 für die Drosselklappe, eine Signalausgabe 9 für die Kraftstoffeinspritzung und eine Signalausgabe 10 zum Steuern des Zündwinkels eines hier nicht weiter dargestellten Verbrennungsmotors eines Kraftfahrzeugs. Über die Signalausgabe 8 wird ein die Drosselklappe des Kraftfahrzeugs betätigender Elektromotor 12 gesteuert. Über die Signalausgaben 9 und 10 werden Aktoren 13 beziehungsweise 14, die zum Beispiel als piezoelektrische oder induktive Aktören ausgeführt sind, gesteuert, die die einzuspritzende Kraftstoffmenge und den Zündwinkel des Motors einstellen.

Die Getriebesteuerung 3 enthält folgende Bestandteile: eine Schaltsteuerung oder IPM-Steuerung 16, die ein integriertes, das heißt gesamtheitliches Steuern des Antriebsstrangs durchführt (IPM steht für Integräted Powertrain Management) und insbesondere die Schaltstrategie festgelegt. Sie erhält über Leitungen - hier hilfsweise als eine Leitung 17 dargestellt - Signale von verschiedenen Sensoren, Steuergeräten oder anderen Fahrzeugkomponenten. Über Leitungen 18, 19 und 20 werden von der Motorsteuerung 2 Daten über verschiedene Werte des Motordrehmoments (auch: Motormoments) zugeführt. Über eine Leitung 21 erhält sie eine Information über das von dem Fahrer des Kraftfahrzeugs vorgegebene Motorsollmoment oder aber über die Stellung des Fahrpedals 6.

Über eine Leitung 22 empfängt die IPM-Steuerung 16 die jeweilige Abtriebsdrehzahl des Getriebes, die der Raddrehzahl und damit - in einem vorgegebenen Verhältnis - der Geschwindigkeit des Kraftfahrzeugs entspricht. Über eine sich verzweigende Signalleitung 23, 24 sendet die IPM-Steuerung 16 einen einzustellenden Zielgang oder eine Zielübersetzung an eine Schaltübergangssteuerung 26 und an eine erste Entscheidungsschaltung 27 sowie an eine zweite Entscheidungsschaltung 28. Diese beiden Entscheidungsschaltungen 27 und 28 sind durch eine bidirektionale Leitung 29 miteinander verbunden.

Alle relevanten Informationen über die Fahrstrategie, den Fahrstil des Fahrers und die jeweilige Fahrsituation gelangen über eine Leitung 25 von der IPM-Steuerung 16 an die Schaltübergangssteuerung 26. Diese sendet an die zweite Entscheidungsschaltung 28 über eine Leitung 30 Steuersignale, mit denen zum Beispiel die zeitliche Ableitung des Motordrehmoments, das heißt die Geschwindigkeit, mit der das Motordrehmoment herabgefahren wird, gesteuert wird.

Je ein Signalausgang der ersten und der zweiten Entscheidungsschaltung 27, 28 sind über Signalleitungen 32 beziehungsweise 33 mit Anschlüssen eines Schalters 34 verbunden. Der von der IPM-Steuerung 16 gesteuerte Schalter 34 verbindet entweder den Ausgang der ersten Entscheidungsschaltung 27 oder den Ausgang der zweiten Entscheidungsschaltung 28 mit einem Addierer 36, dessen Ausgang über eine Leitung 37 mit der Motorsteuerung 2, das heißt insbesondere mit einem Mikroprozessor 38 der Motorsteuerung, verbunden ist. Über die Leitung 37 teilt die Getriebesteuerung 3 der Motorsteuerung 2 das angeforderte Motordrehmoment mit. Über eine Leitung 35 wird an die zweite Entscheidungsschaltung 28 ein Zeittakt gelegt, mit dem das Steuern der Getriebesteuerung 3 von dem Steuern der Motorsteuerung 2 getrennt werden kann. Eine Leitung 39 verbindet einen Ausgang der Schaltübergangssteuerung 26 mit einem Eingang des Addierers 36.

An einem mit "+" gekennzeichneten Eingang des Addierers 36 liegt das von dem Fahrer angeforderte Motordrehmoment an. Dieses sogenannte Fahrerwunschmoment wird außerhalb einer Schaltung, das heißt eines Schaltvorgangs, von der IPM-Steuerung 16 korrigiert. Während einer Schaltung wird es von der Schaltübergangssteuerung 26 korrigiert. Der Schalter 34 unterscheidet somit zwischen der Steuerung außerhalb eines Schaltvorganges und der Steuerung innerhalb oder während eines Schaltvorganges.

Eine Kupplungssteuerung 40 empfängt von der IPM-Steuerung 16 über eine von der Leitung 25 abzweigende Leitung 41 alle relevanten Informationen über die Fahrstrategie, den Fahrstil des Fahrers und die jeweilige Fahrsituation, über eine Leitung 42 eine Information über das angeforderte Soll-Radmoment die Zielposition der Kupplung und das übertragene Motordrehmoment und über eine Leitung 54 Informationen über den aktuellen Zustand des Antriebsstrangs. Aus dem angeforderten Soll-Radmoment kann die Kupplungssteuerung 40 ein Soll-Kupplungsdrehmoment bestimmen. Damit lässt sich die Kupplungslage vorsteuern und die Regelgüte wird deutlich erhöht. Die Kupplungssteuerung 40 sendet ihrerseits über eine Leitung 43 an die IPM-Steuerung 16 ein Ausgangssignal, das der IPM-Steuerung eine Einschränkung der Kupplungsfunktion, zum Beispiel auf Grund von Überhitzung, signalisiert. Übermäßige Hitzeentwicklungen in der Kupplung können beispielsweise bei wiederholten Anfahrvorgängen am Berg mit hoher Fahrzeugbeladung auftreten. Derartige Überhitzungen werden vorteilhaft mit Hilfe eines thermischen Modells in der Kupplungssteuerung 40 ermittelt. Über eine Ausgangsleitung 44 übermittelt die Kupplungssteuerung 40 die tatsächliche Kupplungsposition an die Motorsteuerung 2. Ist der Antriebsstrang mit einem Drehmomentwandler als Anfahrelement versehen, so kann die Kupplungssteuerung 40 entfallen.

Die Leitung 41 ist auch an die zweite Entscheidungsschaltung 28 angeschlossen, so dass auch an diese alle relevanten Informationen über die Fahrstrategie, den Fahrstil des Fahrers und die jeweilige Fahrsituation gelangen. Der Verlauf der (Signal-) Leitungen 41 und 42 ist in der Zeichnung der besseren Übersichtlichkeit wegen nur angedeutet.

Die Kupplungssteuerung 40 ist durch eine Steuerleitung 45 mit einem Kupplungsaktuator oder Kupplungsaktor 46 verbunden, der eine - hier nicht dargestellte - Kupplung des Antriebsstrangs 1 steuert. Über eine Leitung 47, die die Schaltübergangssteuerung 26 mit der Kupplungssteuerung 40 verbindet, wird das Steuern der Kupplung mit dem Schaltvorgang koordiniert.

Die Schaltübergangssteuerung 26 ist durch mehrere Steuerleitungen 48, die hier als eine Mehrfachleitung dargestellt sind, mit elektromechanischen oder elektrohydraulischen Getriebeaktuatoren oder Getriebeaktoren 49 verbunden, die die Gangwechsel in einem, hier ebenfalls nicht dargestellten, Getriebe durchführen.

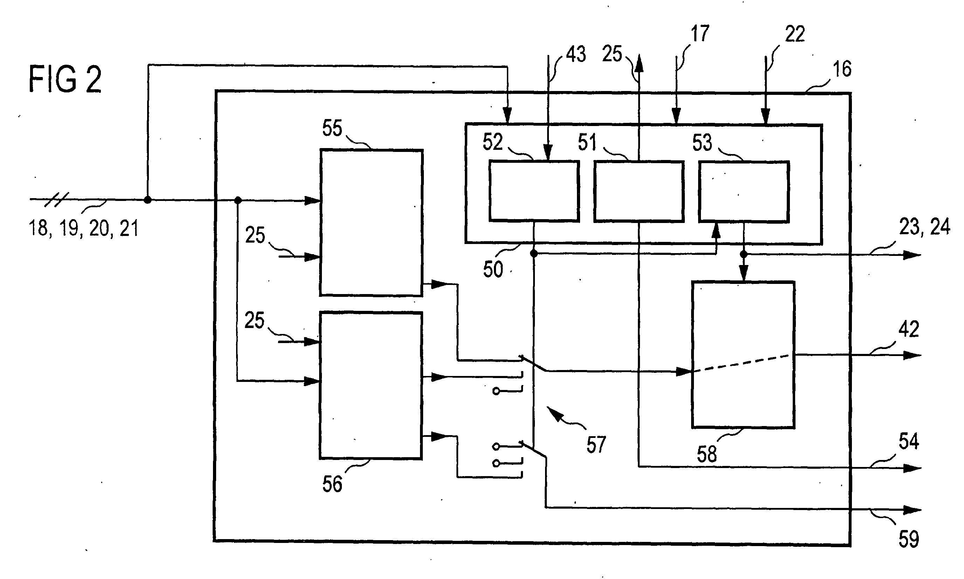

Die Getriebesteuerung 3 ist mit weiteren Schaltungskomponenten versehen, die im vorliegenden Ausführungsbeispiel allesamt Bestandteile der IPM-Steuerung 16 sind (Figur 2). Die IPM-Steuerung 16 ist zentraler und wichtigster Teil der Steuerung des Antriebsstrangs, sie koordiniert die Funktion seiner sämtlichen Einzelbestandteile. Sie wird deshalb auch als Meta-Controller bezeichnet. Die IPM-Steuerung 16 ist hier zwar als in der Getriebesteuerung enthalten dargestellt, dies ist aber nicht notwendig. Sie kann auch anderswo, zum Beispiel in der Motorsteuerung 2 untergebracht sein oder auch als eigenständige Steuereinheit realisiert sein.

Einem Klassifikationsblock 50 werden über die Leitungen 18 bis 21 Daten aus der Motorsteuerung 2 und über die Leitung 22 die jeweilige Abtriebsdrehzahl des Getriebes zugeführt (Figur 2). Außerdem werden über Leitungen - hier hilfsweise als eine Leitung 17 dargestellt - Signale von verschiedenen Sensoren, Steuergeräten oder anderen Fahrzeugkomponenten zugeführt. Dabei werden beispielsweise folgende Einflussgrößen berücksichtigt:
- Betätigung des Bremspedals
- Betätigung des Fahrpedals
- Fahrzeuggeschwindigkeit
- Bewegungsrichtung
- Sitzbelegung
- Motorhaube geöffnet
- Motor läuft
- eingelegte Gangstufe oder Getriebeübersetzung

Grundsätzlich sollten dem Klassifikationsblock 50 alle verfügbaren Signale zugeführt werden, die dazu geeignet sind, die aktuelle oder zukünftige Fahrsituation zu charakterisieren. Hierzu zählen insbesondere auch Daten von fahrzeugexternen Informationsquellen, wie zum Beispiel GPS- oder UMTS-Signale und/oder digitale Karteninformationen, wie sie für den Betrieb von Navigationssystemen bekannt sind. Ebenso sollten dem Klassifikationsblock 50 alle verfügbaren Signale zugeführt werden, die dazu geeignet sind den Fahrstil des Fahrers zu charakterisieren.

Im einzelnen weist der Klassifikationsblock 50 folgende Funktionsblöcke auf: eine Situationserkennung 51, eine Fahrbereichserkennung 52 und eine Fahrstrategieauswahl 53.

Die Situationserkennung 51 dient dazu, die Eingangssignale des Klassifikationsblocks auszuwerten und Ausgangssignale zu erzeugen, die die aktuelle Fahrsituation, den Fahrstil des Fahrers und die Fahrstrategie - ausgegeben auf Leitung 25 - beziehungsweise den aktuellen Zustand des Antriebsstrangs - ausgegeben auf Leitung 54 - möglichst exakt charakterisieren. Das Ausgangssignal auf Leitung 25 umfasst dabei beispielsweise Informationen über den Fahrertyp, die Fahrbahnsteigung oder die aktuelle Fahrzeugbeladung. Das Ausgangssignal auf Leitung 54 beinhaltet dagegen Informationen über den aktuellen Ist- und/oder Sollzustand des gesamten Antriebsstrangs, zum Beispiel "Start-Stop-Betrieb" oder "Segelbetrieb". Mögliche Zustände des Antriebsstrangs sind ausführlich in der älteren Anmeldung DE 100 479 06.5 beschrieben. Aus dieser Zustandsinformation kann dann beispielsweise die Zielposition der Kupplung 52 bestimmt werden.

Die Fahrbereichserkennung 52 dient insbesondere zur Erkennung eines Langsamfahrbereichs oder Kriechbereichs, in dem die Kriechfunktion oder der Kriechmodus aktiv sein soll. Die Fahrbereichserkennung 52 wird im weiteren Verlauf der Beschreibung noch detailliert erläutert.

Die Fahrstrategieauswahl 53 enthält Schaltkennlinien, die dazu dienen, den Getriebegang oder die Getriebeübersetzung möglichst optimal an die jeweilige Fahrsituation und den jeweiligen Fahrbereich - hierzu wird der Fahrstrategieauswahl 53 auch das Ausgangssignal der Fahrbereichserkennung 52 zugeführt - anzupassen. Ein Zielgang oder eine Zielübersetzung des Getriebes wird dann auf Leitung 23/24 ausgegeben. Ist der Antriebsstrang mit einem Drehmomentwandler und einer Wandlerüberbrückungskupplung ausgestattet, so ist die Steuerung der Überbrückungskupplung vorteilhaft in die Fahrstrategieauswahl 53 integriert. Auf Leitung 23/24 wird dann zusätzlich auch der Sollzustand der Wandlerüberbrückungskupplung ausgegeben.

Je nach Fahrbereich wird ein Soll-Radmoment durch einen von zwei verschiedenen Schaltungsblöcken vorgegeben. Im Normalfahrbereich wird in einer ersten Radmomentinterpretation 55 ein Betätigen des Fahr- oder Bremspedals durch den Fahrer in ein Soll- oder Wunsch-Radmoment umgesetzt. Im Langsamfahrbereich dagegen ist weder das Fahr- noch das Bremspedal betätigt, so dass zur Realisierung der Kriechfunktion vom System ein geeigneter Zielwert für das Soll-Radmoment - im folgenden auch Kriechmoment genannt - vorgegeben werden muss. Diese Radmomentvorgabe wird durch eine zweite Radmomentinterpretation 56 geleistet. Hierzu werden in der zweiten Radmomentinterpretation 56 sowohl die von der Motorsteuerung über die Leitungen 18 bis 21 übermittelten Signale als auch die die Fahrsituation und den Fahrstil charakterisierenden Signale auf Leitung 25 ausgewertet. Um bezüglich Fahrkomfort und Sicherheit optimale Zielwerte für das Sollradmoment zu erzeugen, muss innerhalb der Radmomentinterpretation 56 eine Vielzahl von Einflussgrößen berücksichtigt werden. Lediglich beispielhaft seien hier vier Kriterien genannt, die den Zielwert für das Radmoment beeinflussen:
- Mit zunehmender Fahrbahnsteigung wird der Zielwert für das Radmoment erhöht
- Bei Erkennen einer sportlichen Fahrweise wird ein höherer Zielwert für das Radmoment vorgegeben
- Um eine erhöhte Zugkraft beim Anfahren zu erreichen, wie sie bei Einsatz eines Drehmomentwandlers auftritt, wird der Zielwert für das Radmoment mit zunehmendem Anfahrwiderstand erhöht
- Bei Erkennen einer Einpark-Situation, zum Beispiel über Signale einer Einparkhilfe, wird der Zielwert für das Radmoment reduziert

Abhängig von Umfang und Genauigkeit der zur Verfügung gestellten Signale kann der Zielwert für das Radmoment möglichst optimal an die jeweilige Fahrsituation und den Fahrstil des Fahrers angepasst werden. Vorteilhaft ist die zweite Radmomentinterpretation 56 als Fuzzy-System ausgebildet, da sich ein solches besonders gut für derartige Aufgaben eignet. Ein möglicher Fuzzylogik-Regelsatz, der dabei von dem Fuzzy-System abgearbeitet wird, könnte beispielsweise lauten:
IF driver IS sporty THEN tq_{wheel,nom} IS very_high
IF driver IS med THEN tq_{wheel,nom} IS med
IF load IS med THEN tq_{wheel,nom} IS med
IF load IS high THEN tq_{wheel,nom} IS high
IF temp, clutch IS high THEN tq_{wheel,nom} IS small

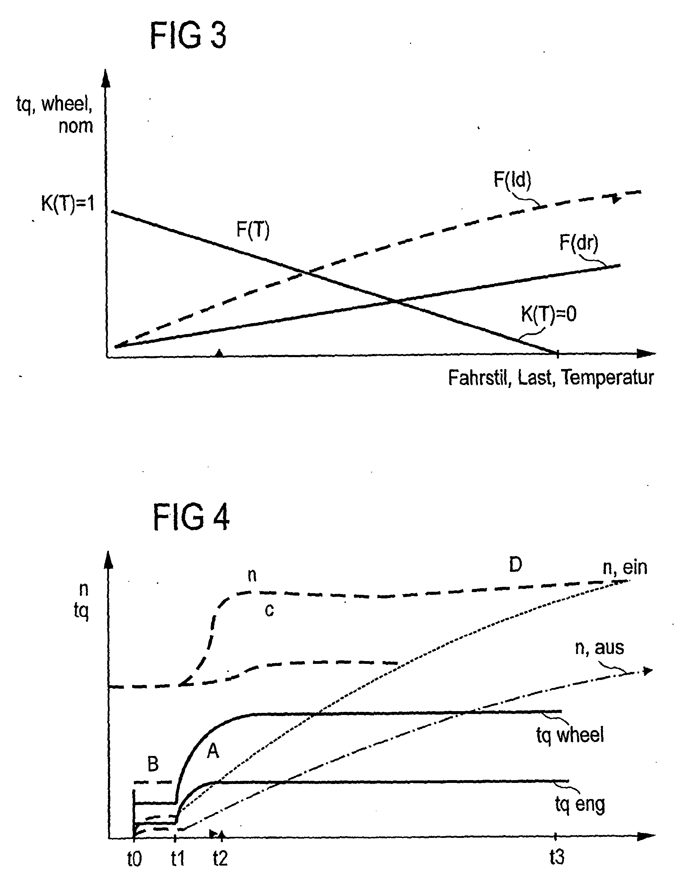

Die zweite Radmomentinterpretation 56 kann aber auch in Form eines Kennfeldes ausgebildet sein. Ein derartiges Kennfeld ist in Figur 3 dargestellt. In dem Kennfeld sind zwei Kennlinien für das Sollradmoment tq_{wheel,nom} abgelegt. Kennlinie F (dr) zeigt das Sollradmoment in Abhängigkeit vom Fahrstil und Kennlinie F(ld) das Sollradmoment in Abhängigkeit vom Fahrwiderstand des Kraftfahrzeugs. Der Fahrwiderstand ist dabei häufig eine Summe aus Fahrbahnsteigung und Fahrzeugmasse. Liegen beide Informationen getrennt vor, zum Beispiel durch Berechnungen, wie sie in der älteren Anmeldung DE 10101758.8 beschrieben sind, oder durch Einbeziehung von Steigungsinformationen eines Navigationssystems so kann die Kennlinie F(ld) in zwei separate Kennlinien aufgelöst werden. Dabei kann entweder zwischen beiden Kennlinien mit einem Kriterium (min/max) oder linear interpoliert (Kennfeld) werden. Eine weitere Kennlinie F(T) kann einen reduzierten Kriechmodus bereitstellen, wenn zum Beispiel die Kupplung thermisch stark beansprucht ist - signalisiert durch ein Signal auf Leitung 43. Der Funktionswert K(T) stellt dabei einen Faktor dar, der das ursprüngliche Kriechmoment aus F(ld, dr) reduziert.

Über einen Schaltblock 57 kann zwischen den Radmomentvorgaben aus der ersten Radmomentinterpretation 55 - für den normalen Fahrbereich - und der zweiten Radmomentinterpretation 56 - für den Langsamfahrbereich - gewechselt werden. Gesteuert wird der Schaltblock 57 durch die bereits erwähnte Fahrbereichserkennung 52. Durch Auswerten der bereits beschriebenen Eingangssignale des Klassifikationsblocks 50 wird durch die Fahrbereichserkennung 52 ein Eintritt/Austritt in/aus den/dem Langsamfahrbereich erkannt. Dabei gelten folgende Eintrittsbedingungen:
- Antriebsmotor läuft und
- Anfahrgang ist eingelegt und
- Fahrzeuggeschwindigkeit liegt unterhalb eines-vorgegebenen Schwellwerts, des sogenannten "Stillstandschwellwerts" und
- Fahrpedal ist unbetätigt und
- Bremsbetätigung wird gelöst

Als mögliche Austrittsbedingungen ergeben sich:
- Betätigung des Bremspedals und/oder
- Betätigung des Fahrpedals und/oder
- Fahrwiderstand überschreitet einen vorgegebenen Grenzwert und/oder
- Übermäßige Belastung des Drehmomentübertragungssystems, insbesondere übermäßige Hitzeentwicklung in der Kupplung - derartige Änderungen im Systemverhalten werden dem Fahrer vorteilhaft auch akustisch oder optisch gemeldet und/oder
- Erkennen eines Sensorausfalls, zum Beispiel Fahrpedal- oder Bremspedalsensoren und/oder
- Überschreiten einer vorgegeben Zeitspanne

Um eine optimale Anpassung der Getriebeübersetzung an die jeweilige Fahrsituation und den jeweiligen Fahrbereich zu gewährleisten, enthält die Fahrstrategieauswahl 53 vorteilhaft einen eigenen Schaltliniensatz für den Kriechmodus. Dadurch kann beispielsweise bei einem Ankriechen am Berg ein kleiner Gang gewählt werden, um an der Kupplung eine möglichst geringe Differenzdrehzahl zu erreichen und somit die Kupplung thermisch nur minimal zu belasten.

Das über den Schaltblock 57 ausgewählte Ausgangssignal der Radmomentinterpretationen 55 und 56 wird vorteilhaft einer Verteilereinheit 58 zugeführt, die das angeforderte Radmoment auf verschiedene Antriebseinheiten, falls vorhanden, verteilt. Hierzu wird das angeforderte Radmoment in Soll-Antriebsmomente für die einzelnen Antriebseinheiten umgesetzt. Stehen auch elektrische Maschinen, zum Beispiel in Form eines Kurbelwellen-Starter-Generators, zur Verfügung, wird der Verteilereinheit 58 auch ein Signal zugeführt, das die Ladung des zugehörigen elektrischen Energiespeichers charakterisiert, da die Ladung des Energiespeichers für die Einsetzbarkeit der elektrischen Maschine von grundlegender Bedeutung ist. Ebenso kann die Verteilereinheit 58 bei entsprechender Ausrüstung des Kraftfahrzeugs auf eine elektrische Bremse einwirken, um das Kraftfahrzeug zum Beispiel im Falle eines Bergabrollens bei nicht aktiviertem Kriechmodus in einen sicheren Systemzustand zu überführen. In der Figur wurde aus Gründen der Übersichtlichkeit davon ausgegangen, dass lediglich ein Verbrennungsmotor als Antriebseinheit zur Verfügung steht. Das Ausgangssignal der Verteilereinheit 58 auf Leitung 42 entspricht somit dem Eingangssignal der Verteilereinheit 58. Ist der Antriebsstrang aber beispielsweise mit einem integrierten Startergenerator und einem Drehmomentwandler versehen, so wird das Antriebsmoment vorzugsweise durch den Startergenerator aufgebracht, da dieser bei kleinen Drehzahlen ein hohes Drehmoment liefert. Der Verbrennungsmotor kann dabei abgeschaltet werden, was Emissionen und Verbrauch reduziert. Um das erforderliche Moment des Startergenerators zu berechnen, muss die Wandlerverstärkung berücksichtigt werden. In einer alternativen Konfiguration eines Antriebsstrangs kann eine elektrische Maschine direkt am Getriebeabtrieb vorgesehen sein. Diese würde dann durch ein Signal auf Leitung 42 gesteuert.

In Figur 4 ist der zeitliche Verlauf folgender Größen in einem Langsamfahrbereich und bei einem darauf folgenden Anfahrvorgang dargestellt: die Motordrehzahl n, die Getriebeeingangsdrehzahl n_ein, die Getriebeausgangsdrehzahl n_aus, das Motormoment tq_eng und das Radmoment tq_wheel. Bis zum Zeitpunkt t0 bestimmt die Leerlaufregelung der Motorsteuerung 2 die Motordrehzahl tq_eng. Dieses Systemverhalten tritt beispielsweise bei einem Bremsvorgang auf. Zum Zeitpunkt t0 wird beispielsweise die Bremse gelöst, so dass alle Eintrittsbedingungen für den Langsamfahrbereich erfüllt sind. Ab diesem Zeitpunkt wird ein Zielwert für das Radmoment tq_wheel durch die zweite Pedalinterpretation 56 vorgegeben. Bei Fahrten auf ebener Strecke wird dabei ein Soll-Radmoment nach Kennlinie F(dr), bei ansteigender Fahrstrecke ein Soll-Radmoment nach Kennlinie F(ld) vorgegeben. Die Regelung der Motordrehzahl wird von der IPM-Steuerung 16 mittels der Kupplungssteuerung 40 übernommen. Auf diese Weise wird ein Konflikt zwischen EMS- und IPM-basierter Drehzahlregelung vermieden. Der Sollwert für die Motordrehzahl sollte dabei aber nicht merklich von der Vorgabe der Motorsteuerung 2 abweichen, um ein optimales Systemverhalten bezüglich Schadstoffausstoß und Kraftstoffverbrauch zu gewährleisten. Daher wird über eine der Leitungen 18 bis 20 die optimale Leerlaufdrehzahl von der Motorsteuerung an die IPM-Steuerung 16 und an die Kupplungssteuerung 40 übermittelt. Die Strukturumschaltung erfolgt durch ein Signal über die Leitung 44 an die Motorsteuerung 2. Die Kupplungssteuerung 40 steuert dabei die Motordrehzahl gemäß abgelegter Kennlinien, zum Beispiel mittels spezifischer Kennlinien für Winterbetrieb oder für den Betrieb bei thermisch stark beanspruchter Kupplung. Die Kupplungssteuerung 40 wird somit gemäß der Fahrzeugvorgaben von der IPM-Steuerung 16 parametriert. Diese verfügt über Kennlinien für die Motordrehzahl in Form einer Funktion ne = f(tq_eng_nom;t), wobei ne die Motordrehzahl, tq_eng_nom das angeforderte Motordrehmoment und t die Zeit ist.

Liegt das aus dem Radmomentenvorgabe der zweiten Pedalinterpretation 56 resultierende Motormoment über einem Wert, der bei optimaler Leerlaufdrehzahl maximal möglich ist, so kann die Kupplungssteuerung 40 einen entsprechenden Motoreingriff bewirken. Dieses maximal mögliche Motormoment wird ebenfalls über eine der Leitungen 18 bis 20 von der Motorsteuerung übermittelt.

Ab dem Zeitpunkt t1 beginnt der Anfahrvorgang. Eine detaillierte Beschreibung eines Anfahrvorgangs und der sich daraus ergebenden Verläufe der Drehzahlen und Drehmomente ist der eingangs erwähnten EP 1 078 805 A1 zu entnehmen.

Bei herkömmlichen Antriebsstrangsteuerungen ist das Radmoment eine sich aus dem Motordrehmoment und der Getriebeübersetzung ergebende Größe, sie wird dort nicht als Führungsgröße für die Regelung des Antriebsstrangs verwendet. Auch benutzen herkömmliche Antriebsstrangsteuerungen nur eine Kennlinie für den Anfahrvorgang. Die vorliegende Antriebsstrangsteuerung 1 hingegen verwendet für unterschiedliche Kriech- und Anfahrsituationen jeweils an diese angepasste Kennlinien.

Darüber hinaus können je nach Betriebsart des Verbrennungsmotors (Schichtladung/homogen) unterschiedliche Verläufe in den Motorbetrieb eingeprägt werden, um bezüglich Verbrennungsstabilität günstige Betriebsbereiche des Motors zu realisieren.

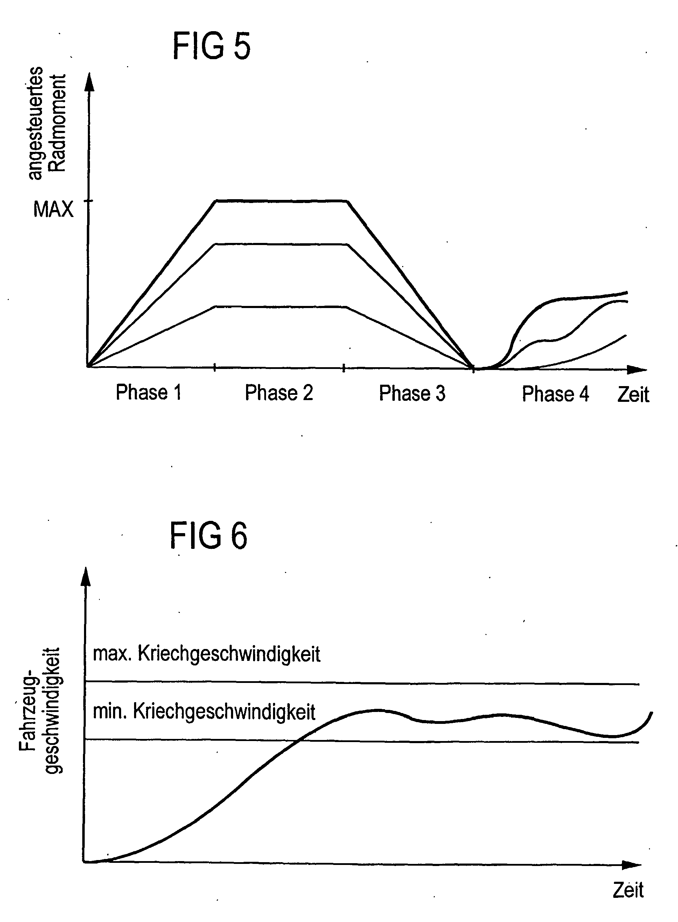

Im folgenden ist anhand der Figuren 5 und 6 ein radmomentbasierter Kriechvorgang beschrieben. Dieser setzt sich aus vier Phasen zusammen. In einer ersten Phase wird das Radmoment in einer linearen Rampe bis zu einem von der zweiten Radmomentinterpretation 56 vorgegeben Wert erhöht (Figur 5). Ist dieser Wert erreicht wird das Radmoment in einer zweiten Phase konstant gehalten, was aber zu einer weiteren Beschleunigung des Kraftfahrzeugs führt (Figur 6). Wird eine vorgegebene Geschwindigkeitsschwelle (Ziel-Kriechgeschwindigkeit) überschritten, wird in einer dritten Phase das Radmoment in einer linearen Rampe auf Null reduziert. Anschließend wird in einer vierten Phase das Radmoment unter Berücksichtigung des aktuellen Fahrbahnwiderstandes derart eingeregelt, dass die Fahrzeuggeschwindigkeit in einem vorgegeben Geschwindigkeitsbereich gehalten wird.

In einer bevorzugten Ausführungsform hat der Fahrer des Kraftfahrzeugs die Möglichkeit, über eine Bedieneinrichtung, zum Beispiel einen Drehknopf im Bereich des Schalthebels oder des Armaturenbretts, ein Sollradmoment für den Kriechvorgang vorzugeben. Dabei wird aber vorzugsweise das Zeitintervall für die erste Phase unabhängig von der Voreinstellung des Fahrers konstant gehalten, das heißt bei höheren Vorgabewerten wird entsprechend schneller eingeregelt (Figur 5). Auf diese Weise beeinflusst der Fahrer durch seine Einstellung indirekt auch die Dynamik des Kriechvorgangs. Darüber hinaus wird mit zunehmendem Vorgabewert für das Radmoment auch die Geschwindigkeitsschwelle (Ziel-Kriechgeschwindigkeit) angehoben. Als Extremwerte können vom Fahrer Radmomente für folgende Betriebssituationen vorgewählt werden:
- Fahrzeug mit minimaler/maximaler Zuladung
- Vorwärts-Anfahrgang mit größter Übersetzung (1. Gang) eingelegt
- Keine Fahrbahnsteigung
- Konstante minimale/maximale Beschleunigung innerhalb einer vorgegebenen Zeitspanne

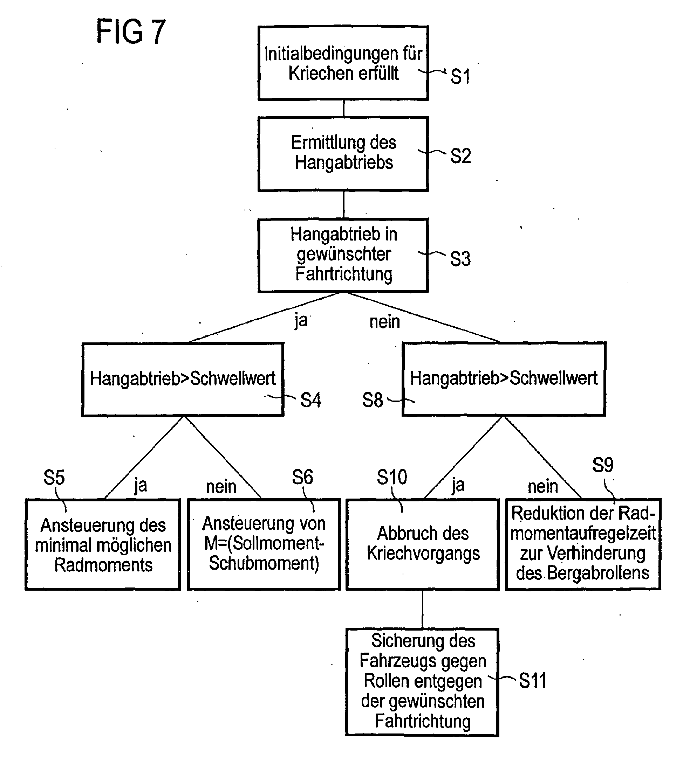

Soll ein Kriechvorgang an einer Steigung angesteuert werden, muss der Hangabtrieb und das daraus resultierende hangabtreibende Radmoment bei der Steuerung des Kriechmoments berücksichtigt werden (Figur 7). Hierzu wird nach dem Überprüfen der Initialbedingungen für einen Kriechvorgang (Schritt S1) in einem Schritt S2 die Fahrbahnsteigung, der daraus resultierende Hangabtrieb oder das durch den Hangabtrieb angreifende, hangabtreibende Radmoment bestimmt. Stimmen gewählte Fahrtrichtung und Richtung des Hangabtriebs überein (Schritt S3) und liegt die Steigung, der Hangabtrieb oder das daraus resultierende Schubmoment überhalb eines entsprechenden vorgegebenen Schwellwerts (Schritt S4), so wird das minimal mögliche Radmoment angesteuert (Schritt S5). Liegt der Wert unterhalb des Schwellwerts (Schritt S6), so wird das angeforderte Soll-Radmoment um das vorliegende Schubmoment verringert (Schritt S7).

Stimmen dagegen Fahrtrichtung und Richtung des Hangabtriebs nicht überein, so gilt folgendes:

Liegt die Steigung, der Hangabtrieb oder das durch den Hangabtrieb angreifende, rücktreibende Radmoment unterhalb eines vorgegebenen Schwellwerts (Schritt S8), wird die Aufregelzeit für das Radmoment derart verkürzt, dass das Radmoment abhängig vom Hangabtrieb möglichst schnell aufgeregelt wird, um ein Abwärtsrollen des Kraftfahrzeugs möglichst schnell zu beenden (Schritt S9). Übersteigt aber der Wert den Schwellwert, so wird zur Sicherung des Kraftfahrzeugs gegen ungewolltes Abwärtsrollen der Kriechvorgang durch gezielten Abbau des Radmoments abgebrochen (Schritt S10) und ein automatischer Bremseingriff veranlasst (Schritt S11). Diese Funktion der "Rückrollverhinderung" ist im folgenden noch detailliert erläutert.

Zusätzlich zur Vorgabe eines Radmoments im Langsamfahrbereich (Kriechmodus) kann mit Hilfe der zweiten Radmomentinterpretation 56 bei Stillstand des Kraftfahrzeugs an einer Steigung ein Zurückrollen des Fahrzeugs verhindert werden. Dabei wird das Radmoment zunächst entsprechend einer vorgegebenen, vom Hangabtrieb oder vom Fahrwiderstand abhängigen Funktion abgebaut. Von der zweiten Radmomentinterpretation 56 wird abhängig von der Fahrbahnsteigung ein erforderliches Bremsmoment bestimmt, zum Beispiel durch Berechnen des Hangabtriebsmoments oder durch Auslesen aus einem Kennfeld. Auch hierbei ist es von besonderem Vorteil, wenn Informationen über Fahrbahnsteigung und Fahrzeugmasse getrennt voneinander vorliegen. Besonders vorteilhaft ist diese Funktion zu realisieren, wenn das Kraftfahrzeug mit einer elektrischen Bremse ausgestattet ist; da das gewünschte Bremsmoment dann ohne Verlustleistung und entsprechenden Verschleiß an der Kupplung bereitgestellt werden kann. Allerdings muss ein gleichzeitiges Aufbringen von Antriebsmoment und Bremsmoment sicher ausgeschlossen werden. Aus diesem Grund ist der Schaltblock 57 (Figur 2) derart ausgestaltet, dass eine eigene Schaltstellung für die "Rückrollverhinderung" vorgesehen ist. Über eine Leitung 59 wird das angeforderte Bremsmoment von der zweiten Radmomentinterpretation 56 an ein nicht dargestelltes elektrisches Bremssystem übertragen. Gesteuert wird der Schaltblock 57 auch zum Aktivieren der "Rückrollverhinderung" von der Fahrbereichserkennung 52. Von der Fahrbereichserkennung 52 werden dabei folgende Eintrittsbedingungen geprüft:
- Motor läuft
- Anfahrgang ist eingelegt
- Fahrzeuggeschwindigkeit ist nahezu null (Stillstand)
- Bremsbetätigung wird gelöst
- Fahrpedal ist unbetätigt
- Fahrbahnsteigung oder Fahrwiderstand ist über vorgegebenem Schwellwert
- Richtung der Hangabtriebskraft ist entgegen der gewählten Fahrtrichtung

Sind alle diese Bedingungen erfüllt wird der Schaltblock 57 derart gesteuert, dass über die Leitung 59 das entsprechende Sollmoment übertragen werden kann.

Analog dazu wird die "Rückrollverhinderung" deaktiviert, wenn von der Fahrbereichserkennung 52 eine der folgenden Bedingungen als erfüllt erkannt wird:
- Bremspedal ist betätigt und/oder
- Fahrpedal ist betätigt und/oder
- Fahrzeuggeschwindigkeit ist ungleich null und/oder
- Fehlermodus ist aktiv, zum Beispiel bei Sensorausfall

## Patentansprüche

1. Verfahren zum Steuern des Antriebsstrangs (1) eines Kraftfahrzeugs mit einem Motor und einem Getriebe, bei dem
- ein Langsamfahrbereich erkannt wird, wenn der Motor läuft und im Getriebe ein Anfahrgang eingelegt ist und die Fahrzeuggeschwindigkeit unterhalb eines vorgegebenen Schwellwerts liegt und das Fahrpedal und das Bremspedal unbetätigt sind,
- bei Erkennen eines Langsamfahrbereichs zunächst eine Zielgeschwindigkeit erreicht wird und anschließend das Fahrzeug in einem vorgegeben Geschwindigkeitsbereich um die Zielgeschwindigkeit gehalten wird, **dadurch gekennzeichet, dass** dazu von einer Radmomentinterpretation (56) ein Soll-Radmoment vorgegeben wird.

2. Verfahren nach Anspruch 1, **dadurch gekennzeichnet,**
- **dass** das Radmoment in einer ersten Phase von einem Anfangswert auf einen von der Radmomentinterpretation (56) vorgegebenen Zielwert linear erhöht wird,
- **dass** das Radmoment nach Erreichen des Zielwerts in einer zweiten Phase bis zum Erreichen der Zielgeschwindigkeit auf einem konstanten Wert gehalten wird,
- **dass** das Radmoment nach Erreichen der Zielgeschwindigkeit linear bis auf Null abgebaut wird und
- **dass** das Radmoment anschließend in einer vierten Phase abhängig vom Fahrwiderstand derart geregelt wird, dass das Fahrzeug in einem vorgegeben Geschwindigkeitsbereich um die Zielgeschwindigkeit gehalten wird.

3. Verfahren nach einem der vorhergehenden Ansprüche, **dadurch gekennzeichnet, dass** der Zielwert für das Radmoment durch die Radmomentinterpretation (56) abhängig von der Fahrsituation und vom Fahrertyp festgelegt wird.

4. Verfahren nach einem der vorhergehenden Ansprüche, **dadurch gekennzeichnet, dass** der von der Radmomentinterpretation (56) vorgegebene Zielwert für das Radmoment vom Fahrer veränderbar ist.

5. Verfahren nach einem der vorhergehenden Ansprüche, **dadurch gekennzeichnet, dass** der Zielwert für das Radmoment auf ein minimal mögliches Radmoment gesetzt wird, wenn der Hangabtrieb oder der Fahrwiderstand in Fahrtrichtung einen vorgegebenen Schwellwert übersteigt.

6. Verfahren nach einem der vorhergehenden Ansprüche, **dadurch gekennzeichnet, dass** der Zielwert für das Radmoment um ein auftretendes Schubmoment verringert wird, wenn der Hangabtrieb oder der Fahrwiderstand in Fahrtrichtung unterhalb eines vorgegebenen Schwellwert liegt.

7. Verfahren nach einem der vorhergehenden Ansprüche, **dadurch gekennzeichnet, dass** der Kriechvorgang durch gezielten Abbau des Radmoments abgebrochen wird, wenn der Hangabtrieb oder der Fahrwiderstand entgegen der Fahrtrichtung einen vorgegebenen Schwellwert übersteigt.

8. Verfahren nach Anspruch 7, **dadurch gekennzeichnet, dass** nach Abbau des Radmoments ein automatischer Bremseingriff veranlasst wird.

9. Verfahren nach einem der vorhergehenden Ansprüche, **dadurch gekennzeichnet, dass** die Aufregelzeit für das Radmoment verkürzt wird, wenn der Hangabtrieb oder der Fahrwiderstand entgegen der Fahrtrichtung unterhalb eines vorgegebenen Schwellwerts liegt.

## Claims

1. Method for controlling the drive train (1) of a motor vehicle having an engine and a transmission, wherein
- a slow driving condition is recognised if the engine is running and a starting gear is engaged in the transmission and the vehicle speed lies below a specified threshold value and the accelerator pedal and the brake pedal are not being operated,
- on recognition of a slow driving condition firstly a target speed is achieved and subsequently the vehicle is maintained within a specified speed range about the target speed, **characterised in that** for this purpose a nominal wheel torque is specified by a wheel torque interpretation (56).

2. Method according to claim 1, **characterised in that**
- the wheel torque is in a first phase increased linearly from an initial value to a target value specified by the wheel torque interpretation (56),
- the wheel torque, after the target value has been achieved, is in a second phase maintained at a constant value until the target speed is achieved,
- the wheel torque, after the target speed has been achieved, is decreased linearly to zero and
- the wheel torque is then in a fourth phase adjusted depending on the resistance to rolling such that the vehicle is maintained within a specified speed range about the target speed.

3. Method according to one of the preceding claims, **characterised in that** the target value for the wheel torque is determined by the wheel torque interpretation (56) depending on the driving situation and driver type.

4. Method according to one of the preceding claims, **characterised in that** the target value specified for the wheel torque by the wheel torque interpretation (56) can be changed by the driver.

5. Method according to one of the preceding claims, **characterised in that** the target value for the wheel torque is set to a minimum possible wheel torque if the downhill force or the resistance to rolling in the direction of travel exceeds a specified threshold value

6. Method according to one of the preceding claims, **characterised in that** the target value for the wheel torque is reduced by a push torque arising if the downhill force or the resistance to rolling in the direction of travel lies below a specified threshold value.

7. Method according to one of the preceding claims, **characterised in that** the creeping function is discontinued through selective reduction of the wheel torque if the downhill force or the resistance to rolling opposing the direction of travel exceeds a specified threshold value.

8. Method according to claim 7, **characterised in that**, after the wheel torque has been reduced, an automatic braking intervention is instigated.

9. A method according to one of the preceding claims, **characterised in that** the adjustment time for the wheel torque is shortened if the downhill force or the resistance to rolling opposing the direction of travel lies below a specified threshold value.

## Revendications

1. Procédé pour commander la chaîne cinématique (1) d'un véhicule automobile avec un moteur et une boîte de vitesses, dans lequel
- une plage de conduite lente est reconnue quand le moteur tourne et qu'un rapport de démarrage est enclenché dans la boîte de vitesses, et que la vitesse du véhicule est en dessous d'une certaine valeur de seuil, et que la pédale d'accélérateur et la pédale de frein ne sont pas actionnées,
- lors de la reconnaissance d'une plage de conduite lente, d'abord une vitesse cible est atteinte et ensuite le véhicule est maintenu dans une plage de vitesse prédéfinie autour de la vitesse cible, **caractérisé en ce qu'**un couple de roue de consigne est prédéfini pour cela par une interprétation d'un couple aux roues (56).

2. Procédé selon la revendication 1, **caractérisé en ce que**
- dans une première phase, le couple aux roues est accru linéairement, par l'interprétation du couple aux roues (56), d'une valeur initiale à une valeur cible prédéfinie,
- après l'atteinte de la valeur cible, dans une deuxième phase, le couple aux roues est maintenu à une valeur constante jusqu'à l'atteinte de la vitesse cible,
- après l'atteinte de la vitesse cible, le couple aux roues est diminué linéairement jusqu'à zéro et
- ensuite, dans une quatrième phase, le couple aux roues est régulé en fonction de la résistance à l'avancement de telle sorte que le véhicule soit maintenu dans un intervalle de vitesse prédéfini autour de la vitesse cible.

3. Procédé selon l'une des revendications précédentes, **caractérisé en ce que** la valeur cible pour le couple aux roues est fixée par l'interprétation du couple aux roues (56) en fonction de la situation de conduite et du type de conducteur.

4. Procédé selon l'une des revendications précédentes, **caractérisé en ce que** la valeur cible prédéfinie pour le couple aux roues par l'interprétation du couple aux roues (56) peut être modifiée par le conducteur.

5. Procédé selon l'une des revendications précédentes, **caractérisé en ce que** la valeur cible pour le couple aux roues est positionnée à un couple aux roues minimal possible quand la force descensionnelle de la pente ou la résistance au roulage dans le sens de la marche dépassent une valeur de seuil prédéfinie.

6. Procédé selon l'une des revendications précédentes, **caractérisé en ce que** la valeur cible pour le couple aux roues est diminuée d'un couple de poussée survenant quand la force descensionnelle de la pente ou la résistance au roulement dans le sens de la marche se trouvent en dessous d'une valeur de seuil prédéfinie.

7. Procédé selon l'une des revendications précédentes, **caractérisé en ce que** le processus de rampement est interrompu par une diminution ciblée du couple aux roues quand la force descensionnelle de la pente ou la résistance au roulement à l'encontre du sens de marche dépassent une valeur de seuil prédéfinie.

8. Procédé selon la revendication 7, **caractérisé en ce qu'**après la diminution du couple aux roues, une intervention automatique de freinage est déclenchée.

9. Procédé selon l'une des revendications précédentes, **caractérisé en ce que** le temps de correction vers le haut pour le couple aux roues est raccourci quand la force descensionnelle de la pente ou la résistance au roulement à l'encontre du sens de marche se trouvent en dessous d'une valeur de seuil prédéfinie.
